# EUROPEAN PATENT APPLICATION

(11) **EP 1 381 193 A1**
(43) Date of publication of application: **14.01.2004**
(21) Application number: 03015331.6
(22) Date of filing: 07.07.2003
(51) Int. Cl.: H04L 12/58

(54) **Method and apparatus for communication control using adaptive throttling**

(30) Priority: 08.07.2002 US 190632
(71) Applicant: MOTOROLA, INC., Schaumburg, IL 60196 (US)
(72) Inventor: Oberlander, Lewis, Buffalo Grove, Illinois 60089 (US); Sasuta, Michael, Mundelein, Illinois 60060 (US)
(74) Representative: Litchfield, Laura Marie

(57) **Abstract**

A communication control method and apparatus (101) includes an adaptive throttling message agent (102) in communication with an adaptive throttling strategy module (104) for throttling message information (112) provided from a messaging server (110) to a communication device (136). When the messaging server (110) provides message information (112) to the adaptive throttling message agent (102), a throttling strategy request (120) is provided to the adaptive throttling strategy module (104). The adaptive throttling strategy module (104) generates a throttling strategy (132) in response to a plurality of system and communication device input parameters (126, 128 and 130). The throttling strategy (132) is provided back to the adaptive throttling message agent (102) whereupon a throttled message (134) is generated and provided to the communication device (136) in response to the throttling strategy (132).

## Description

### BACKGROUND OF THE INVENTION

The present invention relates generally to controlling communications and more specifically to the control of the transfer of information across a communication network.

With the increase in communication of message information, there has been an increased demand on available bandwidth within a communication system. Typically, communication systems provide communication between at least one communication device and at least one server, wherein each communication transmission utilizes available network bandwidth. With further developments in communication devices, such as cellular phones, laptop computers, desktop computers, personal digital assistants (PDA), pagers, etc., there has also been an increase in the amount of message information, where message information is any form of communicated information, such as an email, a page, a voicemail, a facsimile, or any other data, transferred between the at least one communication device and the at least one messaging server.

When one of the communication devices communicates between multiple networks, different approaches may be needed to transfer information to the communication device. Based on specific network properties, for example, such as available bandwidth or the message type, the message information may be truncated, distorted, or even lost while being transmitted.

Another problem that may occur is an increased latency period in delivering the messages due to the bandwidth limitations. One approach is pushing the message information to the communication device, as this can reduce system latency if the timing of the push technology coincides with available bandwidth based on system parameters. Pushing can also reduce perceived latency, by allowing transfer of a message to proceed before the user becomes aware of the message's availability. Pushing all message information can be very costly and perhaps infeasible due to consideration of costs and limited bandwidth resources available to the messaging server and the communication network.

If the messaging server communicates via multiple networks having different bandwidth capacities, and each network may have a different user cost associated therewith, problems arise in determining and coordinating the pushing of the message information to the at least one communication device.

Furthermore, when the message information is transferred between communication devices, a router is typically utilized. A router typically includes a plurality of address-based priority routing considerations associated with the message information, more specifically a plurality of packets comprising the message information. The router may receive the data packets and extract a specific routing consideration regarding the transfer of the data packets, wherein the routing consideration may be disposed within a look-up table. A typical router scans a destination address of the data packets and utilizes the address to determine routing considerations from the table. The router than typically determines how the data packets should be routed, wherein the routing considerations may be based on priority schemes or any other system or information transfer factors as recognized by one skilled in the art. The plurality of data packets are entirely provided to the destination address, wherein the transmission path may be adjusted based on the routing considerations. A typical router does not adjust the content of the data packets, but merely directs the routing of the data packets based on routing considerations.

Therefore, there exists a need for a control of the transfer of various types of information to the communication device based on, among other things, current network properties.

### BRIEF DESCRIPTION OF THE DRAWINGS

The invention will be more readily understood with reference to the following drawings wherein:
FIG. 1 illustrates a block diagram of the communication control apparatus, in accordance with one embodiment of the present invention;
FIG. 2 illustrates a block diagram of an adaptive throttling message agent, in accordance with one embodiment of the present invention;
FIG. 3 illustrates a flow chart representing a method of operation of the adaptive throttling message agent of FIG. 2;
FIG. 4 illustrates a block diagram of an adaptive throttling strategy module in accordance with one embodiment of the present invention;
FIG. 5 illustrates a flowchart representing a method of operation of the adaptive throttling strategy module of FIG. 4;
FIG. 6 illustrates the communication control apparatus disposed within a plurality of networks, in accordance with one embodiment of the present invention;
FIG. 7 illustrates a software embodiment the communication control apparatus disposed within a plurality of networks, in accordance with one embodiment of the present invention.

### DETAILED DESCRIPTION

Briefly, a method and apparatus controls communication between a server, such as a messaging server or any other type of communication device which holds message information, and at least one communication device. An adaptive throttling message agent is in communication with the at least one communication device, wherein the communication device may be a terminal computer, a mobile computing device such as a laptop computer, a personal digital assistant, mobile telephone or any other suitable device for the communication of information.

In one embodiment, a messaging server is operably coupled to the adaptive throttling message agent, wherein the messaging server provides message information to the adaptive throttling message agent, which controls the transfer of the message information to the at least one communication device in response to a throttling strategy. Coupled to the adaptive throttling message agent is an adaptive throttling strategy module, which may be implemented in hardware, software or a combination thereof. The adaptive throttling strategy module generates the throttling strategy in response to a throttling strategy request from the adaptive throttling message agent. The throttling strategy request is generated by the adaptive throttling message agent in response to the message information from the message server. The throttling strategy is generated using, not only the information within the adaptive throttling strategy request, but also message throttling rules, global environment information and communication device connectivity information from a communication device mobile agent database.

Once the adaptive throttling message agent receives the throttling strategy, a throttled message is generated to control the transfer of the message information to the communication device. More specifically, the throttled message is generated by a message throttling agent throttling the message information, wherein throttling of message information includes, but is not limited to, no throttling wherein the full message information is transmitted, partial throttling wherein a portion of the message information, notification information in lieu of the message information, or any other suitable information is transmitted or full throttling wherein no message information is transmitted.

Thereupon, the throttled message is provided to the at least one communication device, wherein the throttled message is at least a portion of the message information, such as but not limited to the full or a truncated portion of the message information, the message information without file attachments, the message information header, the identity of the sender of the message information, notification information, or any other indicia of the message information.

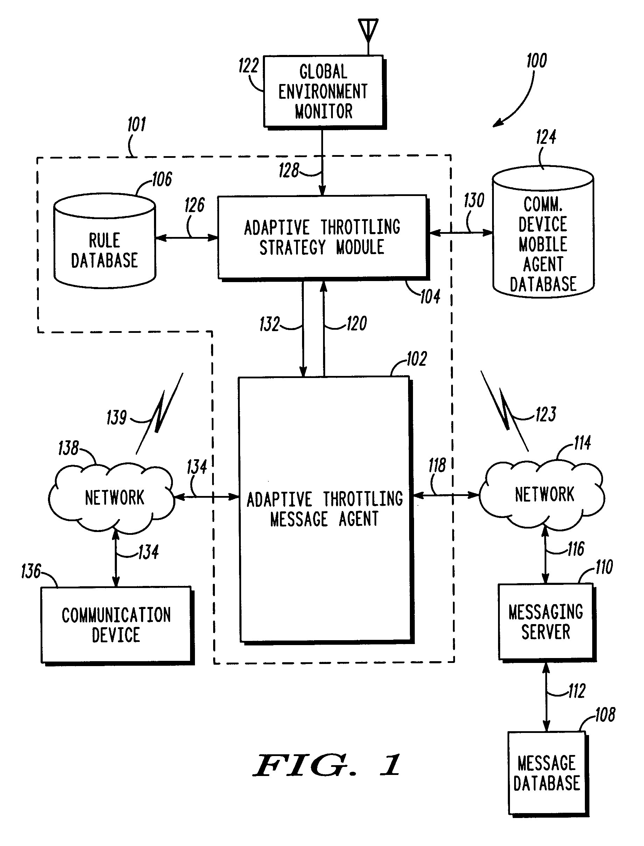

FIG. 1 illustrates a communication system 100 having a control apparatus 101 in accordance with one embodiment of the present invention. The control apparatus 101 includes an adaptive throttling message agent 102, an adaptive throttling strategy module 104 and a rule database 106. The adaptive throttling message agent 102, adaptive throttling strategy module 104 and the rule database 106 may be implemented in hardware, software, firmware or any suitable combination thereof.

Within the communication system 100, a message database 108 is coupled to a messaging server 110, wherein the messaging server receives message information 112 from the message database 106. The message server 110 communicates with the adaptive throttling message agent 102 through a network 114, such as a wireless wide area network, an internet, an enterprise network, a local area network, or any other network, such as a wireless or a wired network, through communication paths 116 and 118 respectively.

In one embodiment, the messaging server 110 and the message database 108 reside on a computer network system, not illustrated, where the messaging server 110 receives a plurality of messages containing message information 112 from multiple communication systems, such as other networks, and stores the message information 112 in the message database 108, which may include any suitable type of memory device including, but not limited to electromagnetic, chemical, optical, organic, etc., such as a random access memory (RAM), a read only memory (ROM), dedicated server, cache, temporary buffer or any other suitable memory location.

Upon receiving the message information 112, the messaging server 110 provides the message information 112 to the adaptive throttling message agent 102 via communication paths 116 and 118 through network 114. The communication paths 116 and 118 may be a wireless connection across a wireless network, a local or wide area network connection, or any other suitable communication path. Furthermore, the message information 112 is provided to the adaptive throttling message agent 102 using any known information transfer protocol such as POP3, IMAP or any other suitable transfer protocol recognized by one having ordinary skill in the art.

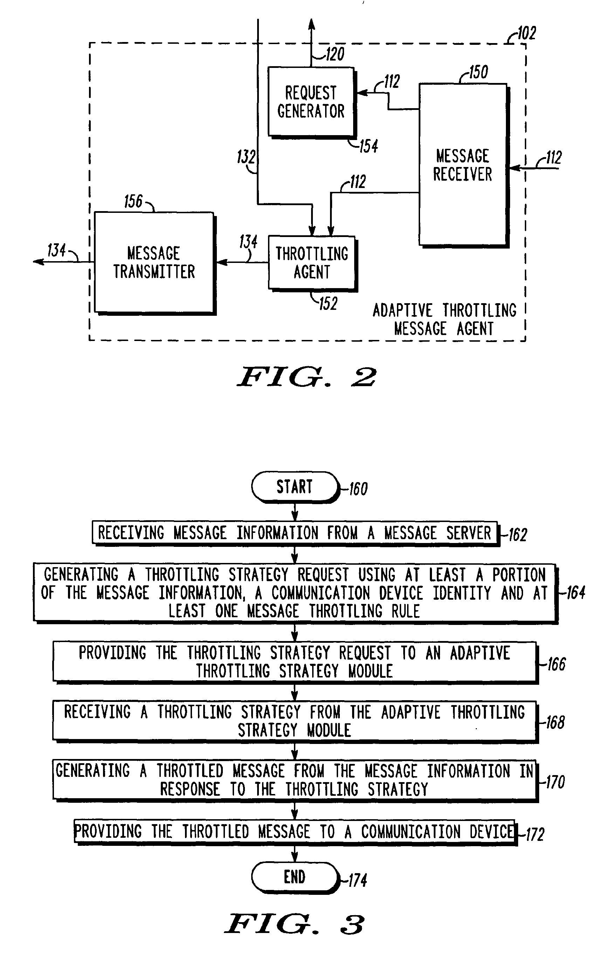

Once the adaptive throttling message agent 102 receives the message information 112, the adaptive throttling message agent 102 thereupon generates a throttling strategy request 120, discussed in greater detail with reference to FIGS. 2-3, which is provided to the adaptive throttling strategy module 104.

The adaptive throttling strategy module 104 is operably coupled to the rule database 106, a global environment monitor 122 and a communication device mobile agent database 124. In one embodiment, the rule database 106 is a database containing at least one message throttling rule 126, wherein a message throttling rule 126 is any type of rule, direction or preference used by the adaptive throttling strategy module 104 in generating a throttling strategy. For example, a message throttling rule 126 may be to provide only the header or title of the message information 112 when the communication network has an available bandwidth capacity below a certain level, or only provide the message information without attachments when the message is provided from a specific user or server. Furthermore, the rule database 106 may be a memory structure, a look-up table, a decision tree, or any other type of information structure storing at least one message throttling rule 126.

The global environment monitor 122 is a controller, utilizing either hardware, software or a combination thereof, which monitors the global environment within which the system 100 is disposed and provides global information 128, such as, but not limited to, date, time, system bandwidth availability, and any other suitable information as recognized by one having ordinary skill in the art, to the adaptive throttling strategy module 104. The global environment monitor 122 may receive network information 123, such as, but not limited to, bandwidth capacity, current access charges and any other suitable information as recognized by one having ordinary skill in the art, from the network 114, via a wireless connection, but may also be across wired connection between the network 114 and the global environment monitor 122. The global environment monitor 122 provides the adaptive throttling strategy module 104 with the global information 128. The global environment monitor 122 is illustrated herein as a separate functional block, but may be incorporated within the network 114, the adaptive throttling message agent 102, the adaptive throttling strategy module 104, or any other location wherein the global environment monitor 122 may receive network information relating to the current state of the communication system 100 and provide the global information 128, either directly as illustrated in FIG. 1, or indirectly to the adaptive throttling strategy module 104.

The communication device mobile agent database 124 is a database, such as a memory server, which, among other things, provides specific communication device information 130 to the adaptive throttling strategy module 104. In one embodiment, the communication device information 130 may be information directly related to available memory disposed on various communication devices accessed by the messaging server 110 or a communication device preference, such as a message throttling rule, regarding income messages. In one embodiment, the communication device mobile agent database 124 tracks various communication devices in communication with the network 114 and maintains the communication device information 130 therein.

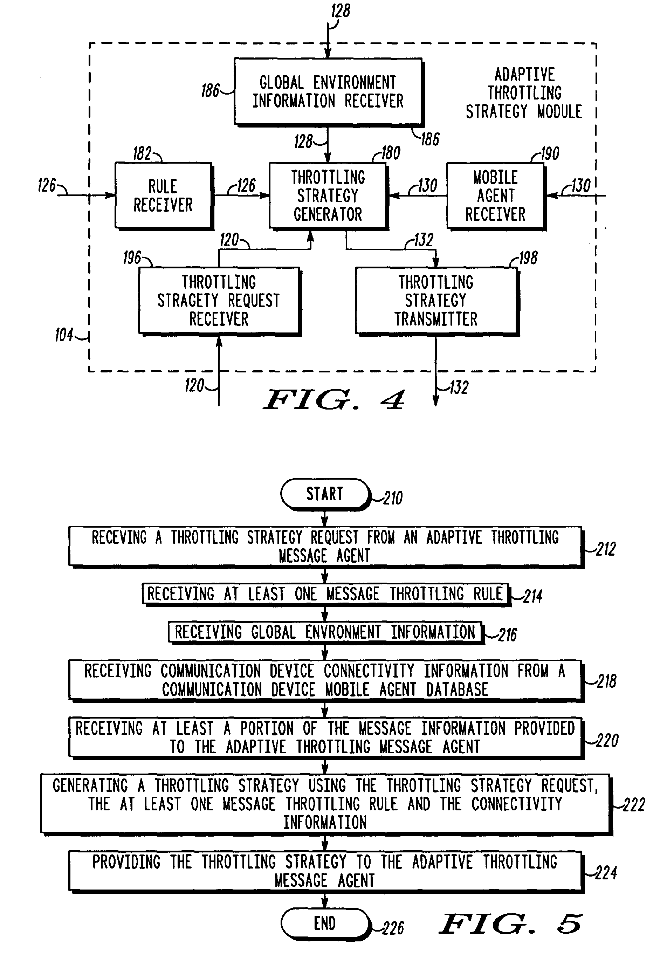

As described in greater detail with reference to FIGS. 4 and 5, the adaptive throttling strategy module 104 generates a throttling strategy 132 that is provided to the adaptive throttling message agent 102. The throttling strategy request 120 may be any suitable data to notify the adaptive throttling strategy module 104 to generate the throttling strategy 132. The throttling strategy 132 may be any suitable data to allow the adaptive throttling message agent 102 to adaptively throttle the message information 112.

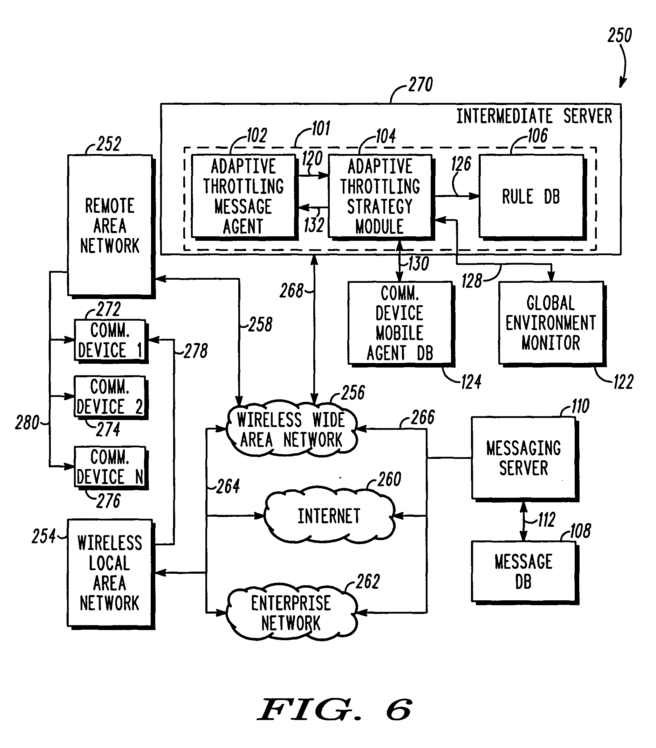

The adaptive throttling message agent 102 thereupon generates a throttled message 134 to control the transfer of message information that is provided to a communication device 136. FIG. 1 illustrates a single communication device 136, as recognized by one having ordinary skill in the art, the adaptive throttling message agent 102 may be coupled to a plurality of communication devices. The throttled message 134 is provided to the communication device 136 across a network 138, which may be a wireless or wired network, similar to network 114. Furthermore, network 114 and network 138 may be the same network, as discussed with reference to FIG. 6. Moreover, networks 114, 138 may be a combination of multiple networks, for example, the throttled message 134 might pass through a wired internet network, then through a GPRS or CDMA cellular data network or a wireless LAN, such Bluetooth or IEEE 802.11. As such, the global environment monitor 122 may also receive network information 139 from the network 138. Similar to the discussion relating to network 114, the communication path may be a wired communication path or a wireless connection, wherein the global environment monitor 122 receives the network information 139 that is thereupon provided the adaptive throttling strategy module 104.

In the preferred embodiment, the throttled message 134 is generated in response to the throttling strategy 132. Furthermore, the message information 112 may be intended for more than one communication device, such as communication device 136, whereupon the throttled message 134 may be provided to each of these plurality of communication devices. Furthermore, the adaptive throttling message agent 102 may generate multiple throttled messages, such as throttled message 134, wherein different throttled messages are provided to different communication devices, such as an audio portion provided to a mobile phone and a text portion provided to a pager, etc.

As recognized by one having ordinary skill in the art, the adaptive throttling message agent 102 may temporarily store the message information 112 provided from the message database 108 and upon a request from the communication device 136, transmit the throttled message 134. Furthermore, the adaptive throttling message agent 102 may act as a conduit whereupon when the communication device 136 seeks to retrieve the message information 112, the information may be either retrieved from the adaptive throttling message agent 102, the message server 110 or the message database 108. It is further within the scope of the present invention to incorporate further memory in communication with the adaptive throttling message agent 102 to temporarily store message information 112 if the communication device 136 seeks more of the message information 112 then provided by the throttled message 134. Regardless thereof, the communication device 136 may retrieve the message information not apart of the throttled message. For example, if the throttled message includes the message information without attachments, the communication device 136 may at a later time, upon demand, retrieve the attachments from the adaptive throttling message agent 102 or any other temporary storage locations as recognized by one having ordinary skill in the art. The communication device may utilize the throttled message to reference the stored message information not contained within the throttled message to retrieve this information upon demand.

Thereupon, the apparatus 101 provides for the dynamic throttling of message information 112 in response to a plurality of factors, such as, but not limited to, throttling rules, global environment information, communication device information, and a throttling strategy request. Communication device 136 is provided with the throttled message 134 in response to the throttling strategy 132.

FIG. 2 illustrates the adaptive throttling message agent 102 illustrated in FIG. 1. The adaptive throttling message agent 102 may be incorporated as hardware, software, or a combination thereof. In the embodiment of the present invention incorporated in software, programming instructions are executed to perform operations as described below in relation to the following functional blocks. The following functional blocks may represent executable program instructions, individual processors, application specific integrated circuits, digital signal processors, microprocessors, firmware, microcontrollers, state machines, or any other recognized operational component capable of executing program instructions wherein the programming instructions may be disposed on a ROM, RAM, EEPROM, compact disc (CD), digital versatile disc (DVD), optical medium, or any other volatile or non-volatile storage medium.

Within the communication control apparatus 101, the adaptive throttling message agent 102 includes a message receiver 150 that receives the message information 112. The message receiver 150 provides the message information 112 to a throttling agent 152 and a request generator 154. The request generator 154 receives the message information 112, parses out a portion of the message information and any other encoded information which may be encoded therein, such as the identity of the communication device for which the message information 112 is intended, and generates the throttling strategy request 120, wherein the throttling strategy request 120 includes at least one of the following: at least a portion of the message information 112, a header field, the identity of the at least one recipient communication device, or any other pertinent information to be used by the adaptive throttling strategy module 104.

The throttling strategy 132 is generated and provided to the throttling agent 152. The throttling agent 152 thereupon generates the throttled message 134 which is provided to a message transmitter 156 which transmits the throttled message 134 to the communication device 136 across the network 138, not illustrated in FIG. 2, on a per message information 112 basis.

In one embodiment, the throttling strategy 132 includes commands for interpretation by the throttling agent 152, such as but not limited to a plurality of codes representing conditions to impose on the message information 112 to generate the throttled message 134. In one embodiment, the throttling agent 152 may conduct a plurality of tests, comparing components of the message information 112, such as the header, attachments, file size, or any other pertinent information, to parameters or conditions from the throttling strategy 132, wherein the throttled message 134 may be generated by the results of these tests. For example, the throttling strategy may instruct the throttling agent 152 to not transmit any attachments over a specified file size due to limited network bandwidth availability, transmission costs across the network based on the time of day, or any other suitable factor as recognized by one having ordinary skill in the art. The throttling agent 152 may then compare the file size of the attachments and generate the throttled message 134 without the attachments above the file size limitation.

FIG. 3 illustrates a flowchart representing the steps of one embodiment of the adaptive throttling message agent 102 of FIGS. 1 and 2. The method begins 160 by receiving the message information 112 from the messaging server 110, designated at step 162. In one embodiment of the present invention, the message information 112 is any suitable type of information, such as an electronic communication, electronic mail (email), a page, a universal resource locator (URL), an electronic file, or any other suitable message information as recognized by one having ordinary skill in the art. In the next step 164 the throttling strategy request 120 is generated using at least a portion of the message information, and a device identity, including, but not limited to the identity of a recipient which may direct the message information 112 to an intermediary device, such as a server, from the message information 112 from the message receiver 150.

The throttling strategy request 120 contains limited information, but enough information such that the adaptive throttling strategy module 104 may properly generate the throttling strategy 132. For example, the throttling strategy request 120 may include at least one of the following: the identity of the communication device for which the message is intended, the header field, attachments, message urgency, sender identity, or any other suitable information. In another example, the message information 112 may contain a message throttling rule embedded therein, whereupon the message throttling rule is provided with the identity of the recipient communication device 136 and a portion of the message information.

The method further includes providing the throttling strategy request 120 to the adaptive throttling strategy module 104, designated at step 166. This throttling strategy request 120 is provided from the request generator 154. As discussed further with reference to FIGS. 4 and 5, the adaptive throttling strategy module 104 generates a throttling strategy 132, wherein the adaptive throttling message agent 102 receives the throttling strategy 132 therefrom, designated at step 168.

The throttled message 134 is thereupon generated from the message information 112 in response to the throttling strategy 132, step 170. The throttling agent 152 generates the throttled message 134 from the message information 112 received from the message receiver 150 using the throttling strategy 132. The throttled message 134 is then provided to the communication device 136, designated at step 172. The adaptive throttling message agent 102 utilizes the message transmitter 156 that receives the throttled message 134 from the throttling agent 152. The message transmitter 156 transmits the throttled message 134 to the communication device 136 across the network 138, as illustrated in FIG. 1. Thus, the communication device 136 is provided the throttled message 134 that has been adaptively throttled, step 174.

FIG. 4 illustrates the adaptive throttling strategy module 104 of FIG. 1, in accordance with one embodiment of the present invention. The adaptive throttling strategy module 104 includes a throttling strategy generator 180 in communication with a rule receiver 182. The rule receiver 182 receives the at least one message throttling rule 126 from the rule database, illustrated at 106 in FIG. 1. The rule receiver 182 provides the at least one message throttling rule 126 to the throttling strategy generator 180. In one embodiment of the present invention, the rule database 106 provides at least one default rule to the throttling strategy generator 180 via the rule receiver 182. In another embodiment, the at least one default rule may be disposed within the throttling strategy generator 180 wherein the default rules are utilized unless the at least one message throttling rule 126 provide otherwise. The at least one default rule may be determined by, among other things, a local setting in conjunction with the communication device 136 for which the message information 112 is intended, by an environmental or system factor, for example time of day, or by information within the throttling strategy request 120. The throttling strategy generator 180 is further in communication with a global environment information receiver 186 that receives global environment information 128 from the global environment monitor 122 of FIG. 1 and provides the global environment information 128 to the throttling strategy generator 180.

In one embodiment, the global environment information 128 is provided to the throttling strategy generator 180, wherein the throttling strategy generator 180 determines which elements of the global environment information 128 to utilize in generating the throttling strategy 132. In another embodiment, the global environment information receiver 186 parses out specifically relevant elements of the global environment information 128 and provides a portion of the global environment information 128 to the throttling strategy generator 180.

The adaptive throttling strategy module 104 further includes a mobile agent receiver 190 that receives the communication information 130 from the communication device mobile agent database 124 of FIG. 1. The throttling strategy generator 180 also receives the throttling strategy request 120 from a throttling strategy request receiver 196 where the throttling strategy request receiver 196 receives the throttling strategy request 120 from the request generator 154 of the adaptive throttling message agent 102 of FIG. 1.

The throttling strategy generator 180 generates the throttling strategy 132 and provides the throttling strategy 132 to the throttling strategy transmitter 198. Thereupon, the throttling strategy transmitter 198 provides the throttling strategy 132 to the throttling agent 152 of the adaptive throttling message agent 102.

In one embodiment, the throttling strategy 132 is a determination of what part of the message information 112 is to be delivered to the communication device 136 and whether the delivery should be delayed. Evaluating the one message throttling rules 126 against the available information from the throttling strategy request 120, global environment information 128, and the communications information 130 generates the throttling strategy 132. The message throttling rules 126 contain a condition and an action. For example, a message throttling rule 126 may have a condition relating to the time of day wherein a network may charge different access charges for peak and off-peak hours. In one embodiment, the condition is a Boolean function relevant to the available information, such as 132, 128, and 130. The action may specify a strategy to use if the condition is true, or a strategy element to be combined with other such strategy elements to create the strategy. As with the above example, the global environment information 128 may contain the time of day, wherein the condition of the current time is compared with the current time, for example it may be determined that the network 114 is currently in off-peak hours, therefore the amount of throttling of the message information may be reduced. Moreover, the action may modify or control the treatment of subsequent message throttling rules 126. The message throttling rules 126 are provided from the rule database 106 and the conditions are evaluated, and actions are thereupon applied according to whether the corresponding conditions are satisfied. Once all of the message throttling rules 126 have been evaluated and none of the conditions of the rules 126 have been satisfied, default rules within the adaptive throttling strategy module 104 may be evaluated.

In response thereto, the throttling strategy 132 is generated using the actions of the message throttling rules 126. As with the above example, the throttling strategy 132 may now contain instructions to transfer attachments having sizes below a maximum threshold. In another example, the message throttling rules 126 may be based on the available network capacity of the network 114. The network available bandwidth may be provided within the global environment 128 and a condition of the message throttling rule 126 is based on having a percentage of bandwidth available for active transmission. If the network 114 does not have the available bandwidth, the amount of throttling of the message information may be increased. In response to the message throttling rules 126 conditions compared with the other available information, the throttling strategy request is generated by compiling the resultant actions of the message throttling rules 126.

As recognized by one having ordinary skill in the art, the receivers, 182, 186, 190, 196 and 198, receive input information from a plurality of sources and provide system and communication information to the throttling strategy generator 180. It is within the scope of the present invention for the throttling strategy generator 180 to directly receive the system and communication information therein and not utilize the multiple receivers such as 182, 186, 190, and 196. As such, FIG. 4 illustrates one embodiment of the adaptive throttling strategy module and is not herein so limiting.

FIG. 5 is a flowchart illustrating the method of operation of the adaptive throttling strategy module 104, in accordance with one embodiment of the present invention. The method starts, 210, by receiving the throttling strategy request 120 from the adaptive throttling message agent 102, designated in step 212. As illustrated in FIG. 4, the throttling strategy request receiver 196 receives the throttling strategy request 120 and provides the throttling strategy request 120 to the throttling strategy generator 180. Next, step 214, the adaptive throttling strategy module 104 receives message throttling rules 126. The message throttling rules 126 may be provided to the rule receiver 182 and thereupon to the throttling strategy generator 180. As noted above, in one embodiment, the throttling strategy generator 180 may contain default rules that may be utilized by the throttling strategy generator 180. It is further within the scope of the present invention for the throttling strategy request 120 to include message throttling rules and these rules are thereupon provided to the throttling strategy generator 180 via the throttling strategy request receiver 196. Moreover, message throttling rules may be provided from the communication device mobile agent database 124 and provided to the throttling strategy generator 180 via the mobile agent receiver 190.

The adaptive throttling strategy module 104 further receives global environment information 128, step 216, from the global environment monitor, element 122 in FIG. 1. The global environmental information 128 is provided to the global environmental information receiver 186 and thereupon provided to the throttling strategy generator 180. As discussed above, in another embodiment, a portion of the global environmental information 128 may be provided to the throttling strategy generator 180. The adaptive throttling strategy module 104 also receives communication device connectivity information 130 from the communication device mobile agent database 124, designated at step 218. The mobile agent receiver 190 receives the communication device connectivity information 130 and provides this information 130 to the throttling strategy generator 180. As recognized by one of ordinary skill in the art, communication device connectivity information may also be provided through the throttling strategy request 120 provided from the request generator, element 154 of FIG. 2.

The operation of the adaptive throttling strategy module 104 further includes receiving at least a portion of the message information provided to the adaptive throttling message agent 102 within the throttling strategy request 120, step 220. The at least a portion of the message information is provided to the throttling strategy generator 180 through the throttling strategy request receiver 196. Thereupon, the adaptive throttling strategy module 104 generates a throttling strategy 132 using at least one of the following: the throttling strategy request 120, the message throttling rules, such as 126, the global environment information 128, and the connectivity information 130, step 222. The throttling strategy 132 includes instructions for the adaptive throttling message agent 102 for the adaptive throttling message agent 102 to throttle and thereupon transmit at least a portion of the message information 112. The throttling strategy 132 may include instructions for the adaptive throttling message agent 102 to transmit at least one of the following: a reduced portion of the message information, the sender's identity, a title field, message information without attachments, notification information that a message is pending, or any other suitable adaptively throttled message.

The adaptive throttling strategy module 104 provides the throttling strategy 132 to the adaptive throttling message agent 102, designated at step 224. In the embodiment of FIG. 4, the throttling strategy generator 180 provides the throttling strategy 132 to the throttling strategy transmitter 198, which thereupon transmits the throttling strategy 132 to the adaptive throttling message agent 102. As such, the adaptive throttling strategy module 104 produces a throttling strategy 132 in response to a throttling strategy request 120, whereupon the adaptive throttling message agent 102 may properly adaptively throttle the message information 112, step 226.

FIG. 6 illustrates another embodiment of a communication system 250 using adaptive message throttling having both a remote area network 252 and a wireless local area network 254. The remote area network 252 may also be a communication network, such as a wireless local area network, wireless personal area network, or any other network. Wireless local area network 254 may further be similar to the remote area network 252, incorporating wireless mobile technology and/or other known local area network communication techniques, including, but not limited to communication technologies such as analog, CDMA, GSM, TDMA, UMTS, GPRS, IEEE 802.11 wireless LAN technology, Bluetooth, paging technology, etc.

The remote area network 252 is in communication with a wireless wide area network 256 via communication path 258. The wireless local area network 254 is also in communication with wireless wide area network 256, an internet connection 260 and an enterprise network 262 via communication path 264. As recognized by one having ordinary skill in the art, the internet 260 represents the world wide web utilizing internet-based protocols, typically accessed through URLs utilizing standard protocols, such as hyper-text transfer protocol (HTTP). The enterprise network 262 is a private network, such as a commercial network for accessing commercial-based information, such as a weather server or a private communication system, intranet, or any other proprietary network allowing for communication and/or retrieval information therefrom.

The system 250 further includes the message database 108 coupled to the messaging server 110 to provide message information 112, as discussed with reference to FIG. 1. The messaging server 110 is operably coupled to the wireless wide area network 256, the internet 260, and the enterprise network 262 via communication path 266, such as previously designated communication path 116 of FIG. 1. As recognized by one having ordinary skill in the art, the messaging server 110 may be operably coupled to one or all of the illustrated networks, or may be further coupled to more networks not illustrated herein. Similar to the discussion relating to FIG. 1, when the message database 108 receives a message, the messaging server 110 communicates with the communication control apparatus 101. The adaptive throttling message agent 102 receives the message information through at least one of the plurality of operative network connections, such as wireless wide area network 256, internet 260, or enterprise network 262. Each network system may have different transfer protocols and different bandwidth limitations, therefore, for whichever specific output device the message information 112 from the messaging server 110 is intended, the specific network contacts the adaptive throttling message agent 102 via communication path 268.

As discussed with reference to FIG. 1, the communication control apparatus 101 further includes the adaptive throttling strategy module 104 and the rule database 106. The communication control apparatus 101 may be disposed on an intermediate server 270, such as a local server, on a remote network, or any other intermediate network location disposed between and including within the messaging server 110 and the at least one communication device 136. It is further recognized by one having ordinary skill in the art, the adaptive throttling message agent 102, the adaptive throttling strategy module 104, and the rule database 106 may be further disposed on separate servers or communication networks, provided that they are capable of communicating with each other via communication links, prior to transmitting the throttled message 134 to the communication device 136.

Similar to the discussion relating to FIGS. 1 through 5, the adaptive throttling message agent 102 generates the throttled message 134 and provides the throttle message, such as throttled message 134 to the wireless wide area network 256 via communication path 268. In FIG. 6 the communication control apparatus 101 is designated as being coupled to the wireless wide area network 256, but may be further coupled to the internet 260 or the enterprise network 262, or any other communication network as recognized by one having an ordinary skill in the art. Thereupon, the throttle message may then be provided to at least one communication device such as communication device 1, 272, communication device 2, 274 or communication device N, 276, which may be in communication with the wireless local area network 254 or the remote area network 252 via communication paths 278 and 280 respectively. The communication devices 272, 274 and 276, may be a terminal computer, a mobile computing device, such as a laptop computer, a personal digital assistant, cellular or mobile telephone or any other communication device as recognized by one having ordinary skill in the art.

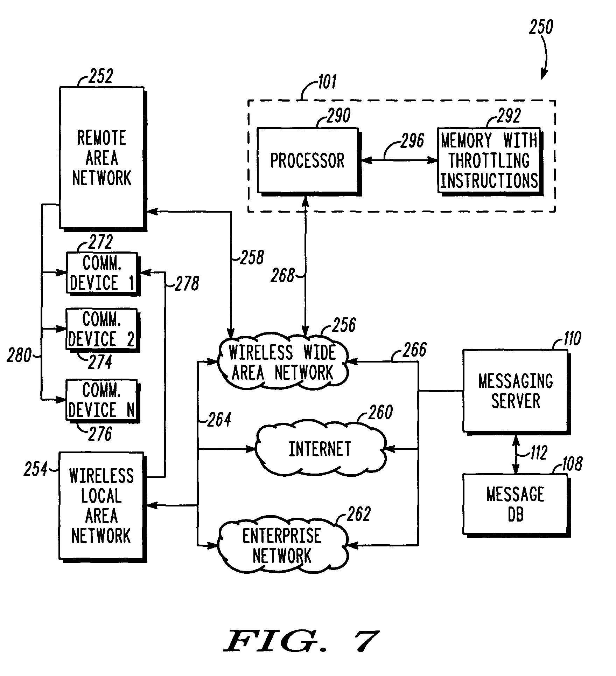

FIG. 7 further illustrates the communication control system 250 of FIG. 6 wherein the communication control apparatus 101 is composed of a processor 290 coupled to a memory with throttling instructions 292. The processor 290 may be, but not limited to, a single processor, a plurality of processors, a DSP, a microprocessor, ASIC, state machine, or any other implementation capable of processing and executing software. The term processor should not be construed to refer exclusively to hardware capable of executing software, and may implicitly include DSP hardware, ROM for storing software, RAM, and any other volatile or non-volatile storage medium. The memory with throttling instructions 292 may be, but not limited to, a single memory, a plurality of memory locations, shared memory, CD, DVD, ROM, RAM, EEPROM, optical storage, micro-code, or any other non-volatile storage capable of storing digital data for use by the processor 290.

Furthermore, the communication control apparatus 101 may be disposed on, but not limited to, a dedicated server, disposed within a wireless wide area network, an internet, an enterprise network, a communication device, a wireless local area network, a remote area network, a wireless personal area network, or any other location capable of being in communication with the messaging server and at least one communication device.

Thereupon, the processor 290 receives the programming instructions 296 disposed within the memory with throttling instructions 292 and executes instructions in accordance with the above-described operations.

Thus, the method and apparatus provides for improved transfer of message information across a communication system by adaptively throttling the message information provided to the communication device. The method and apparatus throttles the message information in accordance with factors relating to the communication system, such as, but not limited to, a network access costs, system bandwidth limitations, the size of the message information, urgency of the message information, or any other suitable communication system factor. The method and apparatus also improves over prior art router technology by selectively adjusting the amount of the message information provided to the communication device, in response to a dynamically generated throttling strategy instead of redirecting the message information based on pre-existing routing considerations.

It should be understood that there exists implementations of other variations and modifications of the invention and its various aspects, as may be readily apparent to those of ordinary skill in the art, and that the invention is not limited by the specific embodiments described herein. For example, the adaptive throttling message agent 102 may be disposed on the messaging server 110 and provide the throttling strategy request 120 through the network 114 and receive the throttling strategy 132 through the network 114 and thereupon only transmit the throttled message 134 to communication device 136 across at least network 114 and network 138. It is therefore contemplated to cover by the present invention, any and all modifications, variations, or equivalents to fall within the spirit and scope of the basic underlying principles disclosed and claimed herein.

## Claims

1. A communication control apparatus **characterized by**:
an adaptive throttling message agent (102) operatively coupleable to at least one communication device; and
an adaptive throttling strategy module (104) operably coupled to the adaptive throttling message agent such that the adaptive throttling message agent controls the transfer of message information to the at least one communication device in response to a throttling strategy generated by the adaptive throttling strategy module.

2. The communication control apparatus of claim 1 further **characterized by** a rule database (106) operably coupled to the adaptive throttling strategy module (104) such that the rule database provides at least one message throttling rule to the adaptive throttling strategy module.

3. The communication control apparatus of claim 1 further **characterized by**:
a global environment monitor (122) operably coupled to the adaptive throttling strategy module (104) such that the global environment monitor provides global environment information to the adaptive throttling strategy module; and
a communication device mobile agent database (124) operably coupled to the adaptive throttling strategy module (104), such that the communication device mobile agent database provides communication device connectivity information to the adaptive throttling strategy module.

4. The communication control apparatus of claim 1 wherein the adaptive throttling message agent (102) provides the throttling strategy request to the adaptive throttling strategy module (104) and wherein the adaptive throttling message agent comprises a message receiver (150) operably coupled to receive message information from a messaging server and a request generator (154) operably coupled to the message receiver, wherein the request generator generates the throttling strategy request.

5. The communication control apparatus of claim 1, the adaptive throttling message agent comprising:
a throttling agent (152) coupled to the adaptive throttling strategy module (104) to receive a throttling strategy therefrom; and
a message transmitter (156) operably coupled to the throttling agent (102) that transmits a throttled message provided from the throttling agent to the communication device, wherein the throttled message includes at least one of the following: the message information, a title of the message information, a partial message, a sender field, notification information, and a header field.

6. A method for communication control **characterized by**:
receiving (162) message information from a messaging server;
providing (166) a throttling strategy request to an adaptive throttling strategy module; and
providing (172) a throttled message to a communication device in response to a throttling strategy.

7. The method for communication control of claim 6 further **characterized by**, prior to providing a throttling strategy request, generating (164) the throttling strategy request, and wherein the throttling strategy request is generated using at least the message information, a communication device identity, and at least one message throttling rule

8. The method for communication control of claim 6 further **characterized by**, prior to providing a throttled message, receiving (168) the throttling strategy generated by the adaptive throttling strategy module and throttling the message information in response to the throttling strategy.

9. The method for communication control of claim 9 further **characterized by** retrieving the message information not contained within the throttled message.

10. A method for communication control **characterized by**:
receiving (212) a throttling strategy request from an adaptive throttling message agent;
generating (222) a throttling strategy using the throttling strategy request; and
providing (224) the throttling strategy to the adaptive throttling message agent.

11. The method for communication control of claim 10 further **characterized by**, prior to generating a throttling strategy:
receiving (214) at least one message throttling rule;
receiving (218) communication device connectivity information; and
receiving (220) at least a portion of message information provided to the adaptive throttling message agent.

12. The method of communication control of claim 10, wherein generating (222) a throttling strategy comprises generating a throttling strategy using at least the throttling strategy request, at least one message throttling rule, communication device connectivity information, at least a portion of message information and global environmental information.

13. The method for communication control of claim 12 further **characterized by** generating a throttled message from message information in response to the throttling strategy.

14. The method for communication control of claim 10 further **characterized by**:
prior to receiving a throttling strategy request, receiving message information from a messaging server and providing the throttling strategy request to an adaptive throttling strategy module; and
providing a throttled message to a communication device in response to the throttling strategy.

15. An apparatus for communication control having at least one processor (290) and at least one memory device (292) coupled to the at least one processor, the at least one memory device **characterized by** having stored executable instructions that, when executed by the at least one processor, cause the at least one processor to receive message information from a messaging server, provide a throttling strategy request to an adaptive throttling strategy module, and provide a throttled message to a communication device in response to a throttling strategy.

16. The apparatus for communication control of claim 15 wherein the at least one memory device (292) is further **characterized by** having stored executable instructions that, when executed by the at least one processor, cause the at least one processor to, prior to providing a throttled message, receive at least one message throttling rule, communication device connectivity information, at least a portion of the message information provided to the adaptive throttling message agent, and global environment information and generate the throttling strategy using at least the throttling strategy request, the at least one message throttling rule, the communication device connectivity information, the at least a portion of the message information and the global environmental information.

17. The apparatus for communication control of claim 15 wherein the at least one memory device (292) is further **characterized by** having stored executable instructions that, when executed by the at least one processor, cause the at least one processor to, prior to providing a throttled message, receive the throttling strategy generated by the adaptive throttling strategy module and throttling the message information in response to the throttling strategy.
